Europäisches Patentamt

European Patent Office

Office européen des brevets

(11) Publication number: **0 074 827**
**B1**

# (12) EUROPEAN PATENT SPECIFICATION

(45) Date of publication of patent specification: **20.07.88**

(21) Application number: **82304792.3**

(22) Date of filing: **10.09.82**

(51) Int. Cl.⁴: **B 65 B 43/48, G 01 G 13/00**

(54) Combinatorial weighing apparatus.

(30) Priority: **11.09.81 JP 144533/81**

(43) Date of publication of application:
**23.03.83 Bulletin 83/12**

(45) Publication of the grant of the patent:
**20.07.88 Bulletin 88/29**

(84) Designated Contracting States:
**DE FR GB IT**

(56) References cited:
**US-A-1 872 686**
**US-A-3 106 277**
**US-A-3 939 928**
**US-A-3 974 888**

(73) Proprietor: **KABUSHIKI KAISHA ISHIDA KOKI SEISAKUSHO**
**44, Shogoin Sannou-cho Sakyo-ku**
**Kyoto-shi Kyoto 606 (JP)**

(72) Inventor: **Morita, Souji**
**959-29, Shimomagari Rittou-cho**
**Kurita-gun Shiga (JP)**
Inventor: **Mikami, Yoshiharu**
**126-12, Shimogamo Miyazaki-cho Sakyo-ku**
**Kyoto-shi Kyoto (JP)**

(74) Representative: **Fane, Christopher Robin King et al**
**HASELTINE LAKE & CO. Hazlitt House 28**
**Southampton Buildings Chancery Lane**
**London, WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to combinatorial weighing apparatus.

A known automatic combinatorial weighing apparatus has a plurality of weighing machines for computing weights of articles supplied to the weighing machines and operates by selecting a combination of those weight values which gives a total weight equal to or closest to a predetermined target weight, discharging the articles from the selected weighing machines, and then supplying new batches of articles, onto those weighing machines from which the previous articles have been discharged, for a next combinatorial weighing operation. Such automatic combinatorial weighing apparatus finds widespread use for weighing various articles as it has a better weighing accuracy and will operate at a higher rate than weighing apparatus having a single weighing machine for weighing articles controlled in an amount supplied to the weighing machine. The principle behind such combinatorial weighing apparatus is described in US—A—3939928.

In the prior automatic combinatorial weighing apparatus, articles must be discharged from the selected weighing machines, and new batches of articles must be distributed and supplied from a supply location to the selected weighing machines from which the previously weighed articles have been discharged. Various kinds of apparatus are known for distributing and supplying articles from a supply location, examples being an apparatus having radial troughs and an apparatus having a distribution bowl. These known kinds of apparatus have sufficient functions and serve to improve the operation efficiency of the automatic weighing apparatus to a large degree. However, articles which can be handled efficiently by the prior kinds of apparatus are limited to those available in the form of flowable particles, powder or lumps which can be distributed and charged vibratably into the automatic weighing apparatus. Articles which are sticky and flow less easily, such as pickles, meat, or dried cuttlefish cannot readily be handled by such known apparatus, as they are difficult to distribute and supply by vibratory feeding means.

An apparatus is proposed having containers for containing a suitable amount of number of articles which are difficult to transport vibratably, the containers being selectively distributed and supplied from a supply location onto weighing machines. After the articles have been weighed, the containers are discharged from the weighing machines and the articles are discharged from the containers at another location. In a combinatorial weighing apparatus, weighing machines are selected freely in each weighing operation, so that loading means for supplying replacement containers, for a next weighing operation, should desirably be capable of loading such replacement containers into freely selected positions.

The proposed apparatus includes a stock table disposed alongside the weighing machines of the automatic weighing apparatus for supporting thereon a line of containers corresponding in position to the weighing machines, respectively, so that containers can be loaded sideways from the table onto selected weighing machines, thereby enabling the containers containing articles therein to be loaded onto desired weighing machines immediately upon demand from the automatic weighing apparatus. After the containers have been loaded, new containers may be added to those left on the stock table in spaced relation until another complete line of containers is formed in preparation for a next re-loading operation. The containers are arrayed on the stock table successively in abutting relation by being pushed together. If the weighing machines of the automatic weighing apparatus are spaced apart at equal intervals, to prevent weighing errors which would otherwise be caused by interference between the containers on adjacent weighing machines during a weighing operation, the mutually abutting containers on the stock table will not be arranged in direct alignment with the respective weighing machines. Since the arrayed containers are not spaced from adjacent ones at suitable spacings, special provisions must be made to ensure that they are distributed properly when they are being loaded sideways onto the weighing machines.

One possible way of achieving proper distribution lies in the use of guide members, disposed between the weighing machines and the stock table, for causing the containers to be distributed appropriately onto the corresponding weighing machines. Another possibility lies in providing for the containers on the stock table to be positively moved slightly, so as to distribute them into positions at suitable intervals, prior to being loaded onto the weighing machines, after which the remaining containers are brought into abutting relation and new containers are added thereto.

With the former possibility, however, the positional adjustment to be brought about by the guide members between the containers and the corresponding selected weighing machines becomes progressively larger, towards the ends of their arrays, as more weighing machines and containers are employed. The apparatus may thus be subjected to undue mechanical burdens and become practically infeasible. The latter possibility is advantageous in that the containers can be spaced reliably no matter how many there are, but disadvantageous in that it will take an increased period of time to space apart and bring together the containers, and the operation efficiency cannot be improved.

In US—A—3,974,888 the present applicants disclosed a combinatorial weighing apparatus in which individual articles after preliminary weighing are supplied to a positioning conveyor from which articles in preselected weight error ranges are pushed (after appropriate positioning) onto respective loading conveyors, for holding respective stocks of such articles, by off-loading devices which are spaced apart along the table in register respectively with the loading conveyors. The loading conveyors serve to hold respective stocks of such articles in the different weight error ranges, and to load such articles individually onto respective weighing machines. WHen an optimum combination of weight values has been identified, the loading conveyors leading to the weighing machines concerned are activated to supply replacement articles to those machines and thereby displace the desired combination of weighed articles onto a discharge conveyor of the apparatus. Such an apparatus will in many circumstances be regarded as undesirably large, complex and expensive, and no consideration is given to the problems of dealing with sticky articles.

According to the present invention, there is provided a combinatorial weighing apparatus, of the kind which includes an array of weighing machines and operates by computing combinations of weight values of different items, supported respectively by the said weighing machines, identifying an "optimum" combination of weight values which gives a total weight equal or closest to a preselected target weight, and discharging the items from those weighing machines that correspond to the optimum combination; such items being supplied initially to an elongate support, extending parallel to the array of weighing machines, and being pushed laterally therefrom towards respective weighing platforms of the weighing machines by selective operation of individual off-loading devices, mounted at respective locations along the said support, when the apparatus is in use; the apparatus being such that when an "optimum" combination has been identified a re-loading operation is carried out in which replacement items are moved onto the weighing platforms of only those weighing machines that correspond to the identified optimum combination, thereby displacing the weighed items corresponding to that optimum combination onto conveying means arranged to convey the displaced items to a discharge location; characterised in that the said elongate support comprises a stock table extending alongside the array of weighing machines; and in that the supplied items comprise respective containers, which are arranged in line on the stock table in abutting relationship one with the next, for containing respective batches of articles to be weighed; and in that guide means are arranged to engage with adjacent such containers, when moved towards the weighing machines by the said off-loading devices, so that such containers are thereby separated and delivered onto the respective weighing platforms of those machines in mutually spaced relationship with one another; the apparatus further being such that in each said re-loading operation at least one of the containers in the said line serves as a dummy container which cannot be moved towards any of the weighing machines; and the said conveying means being constructed and arranged to discharge the articles from the received containers, displaced by each said re-loading operation, and to return those containers, after having been supplied with further respective batches of articles to the line of containers on the stock table.

It is to be noted that somewhat similar use of a dummy container is described in US—A—1,872,686, but in relation only to apparatus for filling successive sets (each of the same preset number) of containers with dry powdered or granular material. The containers are supplied empty to the filling stations, no weighing of any kind is involved, and the end product of each operating cycle is a preset number of individually filled and sealed containers.

Reference will now be made, by way of example, to the accompanying drawings, in which:

Fig. 1 shows a side elevational view of a conventional automatic combinatorial weighing apparatus of a general construction;

Fig. 2 shows a plan view of part of an automatic combinatorial weighing apparatus embodying the present invention;

Fig. 3 shows a side elevational view of a portion of the automatic combinatorial weighing apparatus shown in Fig. 2; and

Fig. 4 shows a side elevational view of a discharge conveyor which is part of the apparatus of Fig. 2.

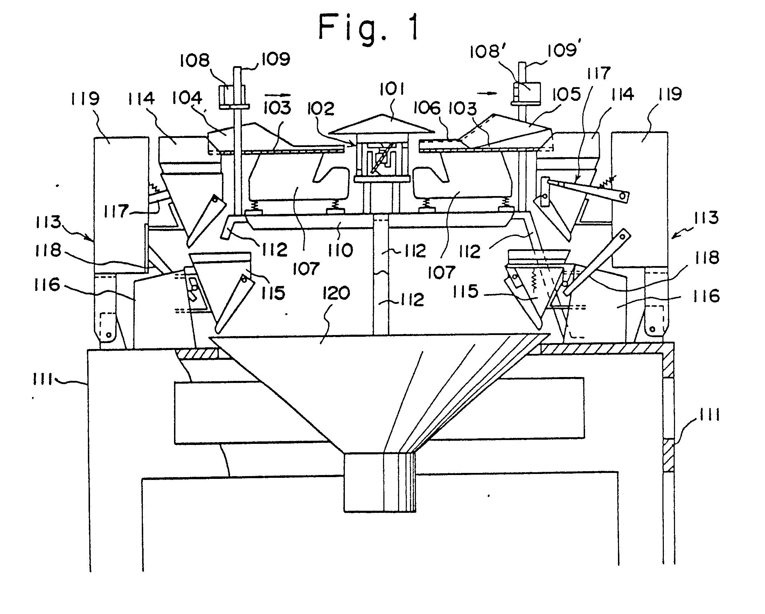

Fig. 1 is illustrative of a conventional automatic combinatorial weighing apparatus having a conically shaped distribution table 101 supported on an electromagnetically vibratable unit 102 for helical reciprocatory vibratory movements. The distribution table 101 may otherwise be rotated in one direction by a drive means such as an electric motor rather than the electromagnetically vibratable unit 102. A plurality of radial supply troughs 103 are disposed around the distribution table 101, each supply trough having a radially inward end positioned below and adjacent to an outer peripheral edge of the distribution table 101. Each supply trough 103 has a radial passage defined by an angularly edged vertical wall 104 and another wall composed of an angularly edged and outwardly inclined wall portion 105 which extends two-thirds of the wall and an outwardly inclined wall portion 106 which extends one-third of the wall along the vertical wall 104 of an adjacent supply trough. The inclined wall portions 105, 106 have portions extending in overhanging relation to but spaced from the vertical wall of the adjacent supply trough 103. The supply troughs 103 are supported respectively on electromagnetically vibratable units 107. The electromagnetically vibratable units 102, 107 are mounted on a support table 110 fixed to a plurality of support legs 112 secured to a frame 111. The support table 110 supports therein a pair of posts 109, 109' which are disposed symmetrically with respect to the distribution table 101 and which support a light source 108 and a photodetector 108', respectively.

There are mounted on the frame 111 a plurality of weighing machines 113 each comprising a pool hopper 114 for receiving articles to be weighed from the supply trough 103, a weighing hopper 115 for receiving the articles from the pool hopper 114, a weighing mechanism 116 for weighing the articles in the weighing hopper 115, and a driver unit 119 for opening and closing the pool hopper 114 and the weighing hopper 115 with lever mechanisms 117, 118. The supply trough 103 has a distal end projecting into the pool hopper 114 of the weighing machine 113 so that the articles from the supply trough 103 will be introduced into the pool hopper 114. A funnel-shaped chute 120 is supported on the frame 111 and has a flaring opening projecting slightly above an upper surface of the frame 111 for collecting the articles discharged from the weighing hoppers 115 of the weighing machines 113 and discharging the articles onto a bucket conveyor (not shown).

When the articles to be weighed are supplied onto the distribution table 101, the articles are distributed into the supply troughs 103 due to vibratory movements of the electromagnetically vibratable unit 102. The supply troughs 103 are also vibrated by the electromagnetically vibratable unit 107 to supply the articles from the supply troughs 103 into the pool hoppers 114 and then into the weighing hoppers 115 in which the articles are weighed. The articles as they have been weighed are discharged down the chute 120 onto the bucket conveyor or a packaging machine (not shown). The articles to be weighed are supplied onto the distribution table 101 by a supply conveyor (not shown) which is controlled by a light signal transmitted from the light source 108 to the photodetector 108' so that the distribution table 101 is always supplied with a constant number of articles to be weighed.

An automatic combinatorial weighing apparatus having ten weighing machines arranged along a straight line and embodying the present invention will now be described with reference to the drawings.

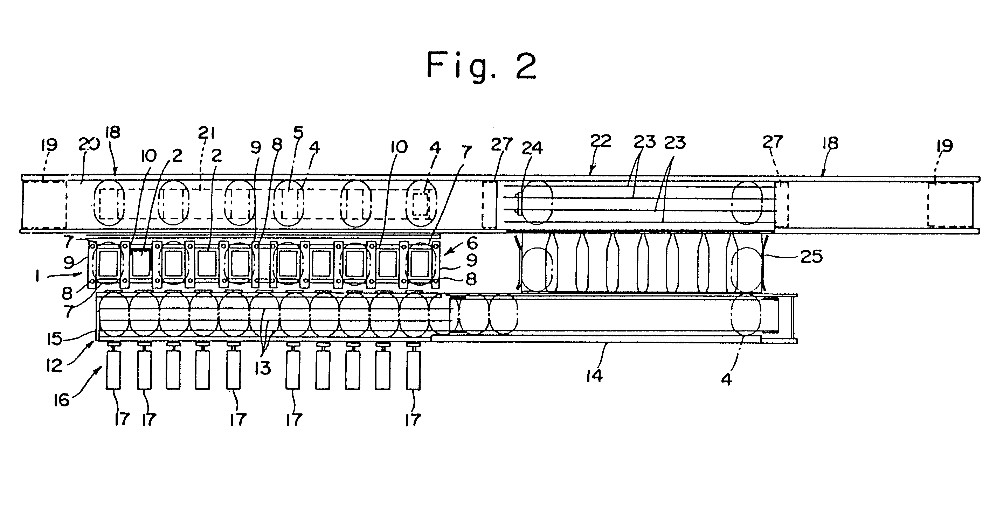

In Figs. 2 through 4, an automatic combinatorial weighing apparatus 1 includes a plurality of weighing machines 3 (ten weighing machines, for example) spaced at suitable intervals and arranged along a straight line and having weighing platforms 2 having flat upper surfaces. The ten weighing machines are grouped into front five weighing machines 3a—3e and rear five weighing machines 3f—3j, the weighing machines in each group being spaced at equal intervals. The fifth weighing machine 3e and the sixth weighing machine 3f are spaced from each other by a distance which is wider but is too small to accommodate a further weighing machine of the same size. Each weighing machine 3 is connected to an electronic arithmetic processor (not shown) for transmitting weight values to the arithmetic processor, in which combinatorial arithmetic operations are effected on the basis of the weight values. Containers 4 serve to hold a suitable amount or number of articles such as meat, pickles, or dried cuttlefish (not shown). Each container 4 is in the form of a bottomed cylinder having a bottom shaped as a rectangle, circle, or oval, and is constructed to facilitate loading or discharging of articles and separation with guides. The bottom of each container 4 has a magnetic body 5 embedded therein for being attracted and retained when the container 4 is to be collected.

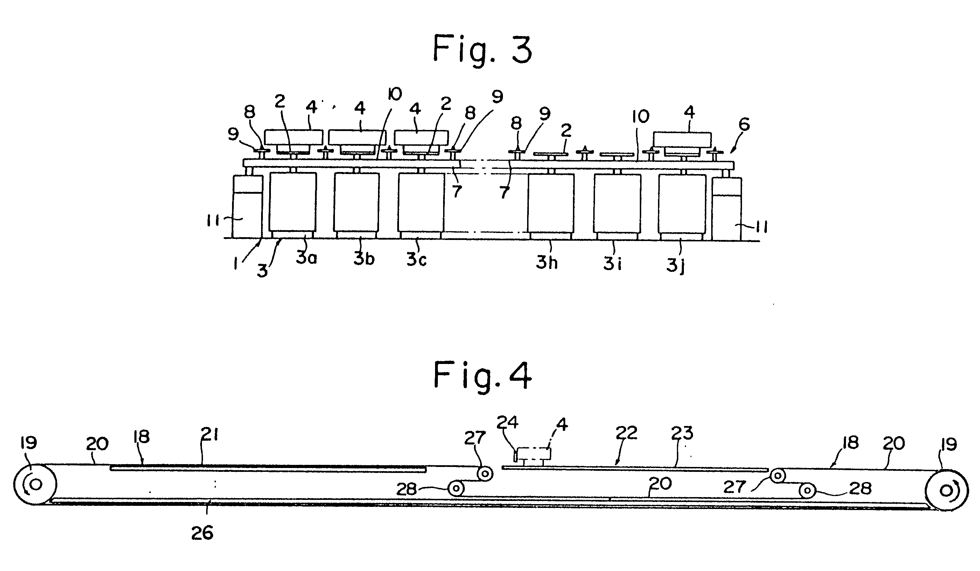

The receiver 6 extends around the weighing machines 3 and is movable up and down for placing the containers 4 onto the weighing platforms 2. The receiver 6 comprises a pair of parallel support bars 7, 7 extending along and on opposite sides of the automatic weighing apparatus 1, and a plurality of guide rods 8 projecting upwardly from the support bars 7, 7 and located between the weighing platforms 2, and a plurality of guide plates 9 extending perpendicularly to the support bars 7, 7 and secured at their ends to the guide rods 8 which extend through the guide plates 9. The support bars 7, 7 and the guide plates 9 jointly define a plurality of windows 10 spaced from each other at equal intervals and large enough to allow the weighing platforms 2 to pass respectively therethrough. The guide rods 8 and the guide plates 9 jointly define spaces for accommodating the containers 4 respectively therein. The receiver 6 has front and rear ends affixed to the distal ends of vertically movable piston rods of cylinders 11, 11, as shown in Fig. 3, the receiver 6 being normally in a position above the weighing platforms 2. When the containers 4 are placed on the guide plates 9, the receiver 6 is lowered past the weighing platforms 2 during which time the containers 4 are transferred from the guide plates 9 onto the weighing platforms 2. Upon completion of a weighing operation, the receiver 6 is raised past the weighing platform 2 while receiving the containers 4 from the weighing platforms 2 onto the guide plates 9. A stock table 12 is disposed alongside of and extends parallel to the automatic weighing apparatus 1, the stock table 12 being composed of a plurality of parallel slide bars 13 extending in the longitudinal direction of the stock table 12. The stock table 12 serves to stock thereon eleven containers 4 which are one more than the weighing machines 3a through 3j of the automatic weighing apparatus 1. Therefore, one of the containers 4 stocked on the stock table 12 constitutes a dummy container which will not be supplied to the weighing machines 3. A pusher conveyor 14 such as a belt conveyor is positioned rearward of the stock table 12 for pushing the containers 4 with articles contained therein successively onto the stock table 12. A first stopper 15 is mounted on a front end of the stock table 12 for positioning the containers 4 on the stock table 12. A loading mechanism 16 is located alongside of the stock table 12 and comprises a plurality of loading cylinders 17 which are as many as the weighing machines 3a through 3j of the automatic weighing apparatus 1 and are positioned in alignment with the containers 4 arrayed on the stock table 12. No loading cylinder however is provided in the position corresponding to the dummy cylinder. The loading mechanism 16 actuates those loading cylinders 17 which load the containers 4 onto the weighing machines 3 that are selected as a result of combinatorial arithmetic operations effected by the automatic weighing apparatus 1.

A discharge conveyor 18 is positioned alongside the automatic weighing apparatus 1 remotely from the stock table 12 for attracting, retaining and transporting the containers 4 as they are discharged from the automatic weighing apparatus 1. The discharge conveyor 18 comprises an endless belt 20 travelling around magnet pulleys 19, 19 and a web-shaped magnet 21 disposed below an upper run of the belt 20 and having the same length as that of the automatic weighing apparatus 1 for attracting the containers 4 onto the belt 20. Another web-shaped magnet 26 extends between magnet pulleys 19, 19 below a lower run of the belt 20. The containers 4 are fed along by the discharge container 18 with the magnetic bodies 5 being magnetically attracted to the magnetic pulleys 19, 19 and the web-shaped magnets 21, 26. Those containers 4 which are emptied by discharging the articles are transferred rearward and collected. A collector table 22 is positioned in the discharge conveyor 18 and lies flush with the upper run of the belt 20 thereof, the collector table 22 being composed of a plurality of parallel slide bars 23. The upper run of belt 20 of the discharge conveyor 18 travels around rollers 27, 28 below the collector table 22. A second stopper 24 is mounted on a front end of the collector table 22 for positioning the containers 4 as they are fed onto the collector table 22 from the rear portion of the discharge conveyor 18. A pusher mechanism (not shown) is located alongside of the collector table 22 for pushing back the containers 4 as they are stopped onto the pusher conveyor 14 over and across a slide plate 25 interposed between the collector table 22 and the pusher conveyor 14.

Operation of the automatic weighing apparatus 1 thus constructed is as follows: The containers 4 with articles contained therein are successively placed on the pusher conveyor 14, or articles are put into the containers 4 placed on the pusher conveyor 14. The containers 4 are then transferred by the pusher conveyor 14 successively onto the stock table 12 as they are pushed forward by the following ones. The containers 4 are stopped by the first stopper 15 and arrayed in abutting relation on the stock table 12. When a predetermined number of such containers 4 are stocked on the stock table 12, the loading cylinders 17 of the loading mechanism 16 are actuated to push the containers 4 off the stock table 12 onto the receiver 6 along the guide plates 9 of the receiver 6 along the guide rods 8, so that the containers 4 are distributed at suitable intervals. At the time of initiating weighing operation, all of the loading cylinders 17 of the loading mechanism 16 are actuated to load all of the containers 4 from the stock table 12, except the dummy container, onto the receiver 6. The dummy container 4 also contains articles, and thus plays dummy only momentarily.

When the containers 4 have been loaded onto the receiver 6 and the loading cylinders 17 have been retracted, another group of containers 4 with articles put therein is supplied from the pusher conveyor 14 onto the stock table 12 on which the containers 4 are arrayed in abutting relation.

Upon loading of the containers 4 on the receiver 6, the cylinders 11, 11 are actuated to withdraw their piston rods to lower the receiver 6 below the weighing platforms 2 of the weighing machines 3a through 3j, respectively, until the containers 4 are transferred onto the weighing platforms 2. Thereafter, the articles contained in the containers 4 are weighed by the weighing machines 3a through 3j, and weight values are supplied to the electronic arithmetic processor in the automatic weighing apparatus 1. The electronic arithmetic processor adds desired ones or a predetermined number of all of such weight values, compares the sums with a weight setting through a combinatorial arithmetic operation, and selects an optimum weight combination which is equal to or closest to the weight setting. When the weight combination has been selected, the cylinders 11, 11 are actuated again to raise the piston rods to lift the receiver 6 until the latter receives the containers 4 while moving up past the weighing platforms 2.

When the receiver 6 stops at its upper limit, those loading cylinders 17 which correspond to the selected weighing machines, for example, the weighing machines 3a, 3c, 3e, 3f, 3h, 3j, are actuated to load the containers 4 onto the receiver 6 at positions above the weighing machines 3a, 3c, 3e, 3f, 3h, 3j while the selected containers 4 are simultaneously discharged onto the discharge conveyor 18 by the newly loaded containers 4.

The discharged containers 4 are attracted and retained by the discharge conveyor 18 and fed forward thereby, and are turned upside down to discharge the articles which are sent as a weighed batch to a next processing step. The empty containers 4 are transported rearward while being attracted to the belt 20 of the discharge conveyor 18.

As the containers 4 are selectively loaded, there are left spaces between adjacent remaining containers 4 on the stock table 12. When the next group of containers 4 is pushed by the pusher conveyor 14 onto the stock table 12, the pushed containers 4 displace the remaining containers 4 in an array forward on the stock table 12.

When the containers 4 are supplied onto the stock table 12, the cylinders 11, 11 are actuated to retract their piston rods to lower the receiver 6 to place the containers 4 onto the weighing platforms 2 of the weighing machines 3a through 3j for a next weighing operation. In such a next weighing operation, those weighing machines 3b, 3d, 3g, 3i which have not been selected in the previous combinatorial weighing operation do not make new weight measurements, but produce weight values previously measured. Such weight values and those of the articles in the newly charged containers 4 are subjected to a combinatorial arithmetic operation in the electronic arithmetic processor, and an optimum combination is selected which is equal to or closest to the weight setting. After such an optimum combination has been selected, the foregoing operation is repeated to load new containers 4 from the stock table 12 onto the selected weighing machines, and the selected containers 4 are discharged by the newly loaded containers 4 onto the discharge conveyor 18. The discharge conveyor 18 transports the discharged containers 4 from which the articles are discharged.

The empty containers 4 are attracted to the lower run of the discharge conveyor 18 and fed along rearward. While they are being transported back, they are cleaned, for example, and are placed on the collector table 22 at a rear portion of the discharge conveyor 18. The empty containers 4 are successively pushed forward on the collector table 22 until they are stopped by the second stopper 24. The empty containers 4 as they are stopped are pushed sideways by the pusher mechanism back onto the pusher conveyor 14 across the slide plate 25. The empty containers 4 on the pusher conveyor 14 are then supplied with articles and transported again onto the stock table 12 for subsequent weighing operation.

With the automatic weighing apparatus of the invention, the stock table 12 stocks thereon the containers 4 which are one more than the weighing machines 3a through 3j, and the central container 4 serves as a dummy container which is not supplied to the weighing machines 3 with the other containers being positioned forward and rearward of such a dummy container. The dummy container serves to take up a dimmensional difference between the containers 4 and the weighing machines 3a through 3j with the result that the containers 4 will be positioned closer to the weighing machines 3a through 3j. The containers 4 can be loaded onto the respective weighing machines 3a through 3j simply by being pushed off the stock table 12 by the loading cylinders 17. When the containers 4 are moved between the adjacent guide rods 8 of the receiver 6, the containers 4 are guided thereby so so to be positionally corrected and distributed reliably onto proper positions. The dummy container is displaced by successively supplied containers 4 in a next weighing operation, and thus can be a normal container 4 which will be supplied to the corresponding weighing machine, and the container which comes to a central position on the stock table 12 then becomes a dummy container in the next weighing operation. Accordingly, the containers can immediately be arranged into an array ready for being loaded onto the weighing machines 3a through 3j even when the containers on the weighing machines are freely selected as a result of a combinatorial weighing operation.

While in the illustrated embodiment only one dummy container is provided for the ten weighing machines 3a through 3j, the present invention is not limited to such an arrangement, but a plurality of dummy containers may be included dependent on dimensional differences between the weighing machines and containers. Furthermore, the weighing machines may be provided in any desired number instead of ten.

In an embodiment of the present invention, as described above, a dimensional difference between the weighing machines and the containers placed on the stock table can be taken up by a dummy container on the stock table. Therefore, the containers to be loaded can be located closer to the weighing machine no matter how many weighing machines there are. The containers do not need to be spaced positively by a mechanical means, but can be separated out of mutual contact simply by the guide rods and supplied onto the weighing machines at suitable spacings in a short period of time.

## Claims

1. A combinatorial weighing apparatus, of the kind which includes an array of weighing machines (3) and operates by computing combinations of weight values of different items, supported respectively by the said weighing machines, identifying an "optimum" combination of weight values which gives a total weight equal or closest to a preselected target weight, and discharging the items from those weighing machines that correspond to the optimum combination; such items being supplied initially to an elongate support (12), extending parallel to the array of weighing machines, and being pushed laterally therefrom towards respective weighing platforms (2) of the weighing machines by selective operation of individual off-loading devices (17), mounted at respective locations along the said support (12), when the apparatus is in use; the apparatus being such that when an "optimum" combination has been identified a reloading operation is carried out in which replacement items (4) are moved onto the weighing platforms of only those weighing machines that correspond to the identified optimum combination, thereby displacing the weighed items corresponding to that optimum combination onto conveying means (18) arranged to convey the displaced items to a discharge location; characterised in that the said elongate support (12) comprises a stock table extending alongside the array of weighing machines (3); and in that the supplied items (4) comprise respective containers, which are arranged in line on the stock table in abutting relationship one with the next, for containing respective batches of articles to be weighed; and in that guide means (6) are arranged to engage with adjacent such containers, when moved towards the weighing machines by the said off-loading devices (17), so that such containers are thereby separated and delivered onto the respective weighing platforms (2) of those machines in mutually spaced relationship with one another; the apparatus further being such that in each said re-loading operation at least one of the containers in the said line serves as a dummy container which cannot be moved towards any of the weighing machines; and the said conveying means (18) being constructed and arranged to discharge the articles from the received containers, displaced by each said re-loading operation, and to return those containers, after having been supplied with further respective batches of articles, to the line of containers on the stock table.

2. An apparatus as claimed in claim 1, wherein the correspondence between the loading devices (17) and the respective weighing machines (3) is such that the said dummy container is located, on the said stock table (12) halfway along the array of weighing machines.

**Patentansprüche**

1. Kombinatorische Wägvorrichtung des Typs, der eine Reihe von Wägmaschinen (3) aufweist und arbeitet durch Errechnen von Kombinationen von Gewichtswerten verschiedener Posten, die jeweils von den Wägmaschinen gestützt sind, Identifizieren einer "optimalen" Kombination von Gewichtswerten, die ein einem vorgewählten Zielgewicht gleichendes oder am nächsten kommendes Gesamtgewicht ergibt, und Ausgeben der Posten aus denjenigen Wägmaschinen, die der optimalen Kombination entsprechen; wobei die Posten anfangs einer sich parallel zu der Reihe von Wägmaschinen erstreckenden länglichen Stützvorrichtung (12) zugeführt werden und durch selektive Betätigung an jeweiligen Stellen längs der Stützvorrichtung (12) montierter einzelner Entladeeinrichtungen (17) seitwärts von der Stützvorrichtung (12) zu jeweiligen Wägplattformen (2) der Wägmaschinen geschoben werden, wenn die Vorrichtung in Betrieb ist; wobei die Vorrichtung derart beschaffen ist, daß, wenn eine "optimale" Kombination identifiziert worden ist, eine Wiederladeoperation ausgeführt wird, bei der Ersatzposten (4) auf die Wägplattformen lediglich derjenigen Wägmaschinen bewegt werden, die der identifizierten optimalen Kombination entsprechen, wodurch die der optimalen Kombination entsprechenden gewogenen Posten auf Fördermittel (18) versetzt werden, die zum Fördern der versetzten Posten zu einer Austragstelle angeordnet sind; dadurch gekennzeichnet, daß die längliche Stützvorrichtung (12) einen Lagertisch aufweist, der sich längsseits der Reihe von Wägmaschinen (3) erstreckt; und dadurch, daß die zugeführten Posten (4) jeweilige Behälter aufweisen, die aneinanderstoßend in einer Reihe auf dem Lagertisch angeordnet sind, zum Aufnehmen jeweiliger Chargen zu wägender Artikel; und dadurch, daß Leitmittel (6) so angeordnet sind, daß sie mit den benachbarten Behältern zusammengreifen, wenn diese von den Entladeeinrichtungen (17) zu den Wägmaschinen hin bewegt werden, so daß die Behälter dadurch separiert und mit gegenseitigem Abstand zueinander auf die jeweiligen Wägplattformen (2) der Maschinen befördert werden; wobei die Vorrichtung ferner derart beschaffen ist, daß bei jeder Wiederladeoperation mindestens einer der Behälter in der Reihe als Pseudo-Behälter dient, der nicht zu irgendeiner der Wägmaschinen bewegt werden kann; und die Fördermittel (18) derart aufgebaut und angeordnet sind, daß sie die Artikel aus den erhaltenen Behältern austragen, die bei jeder Wiederladeoperation versetzt werden, und diese Behälter, nachdem den Behältern weitere jeweilige Chargen von Artikeln zugeführt worden sind, zu der Reihe von Behältern auf dem Lagertisch rückführen.

2. Vorrichtung nach Anspruch 1, bei der die Korrespondenz zwischen den Ladeeinrichtungen (17) und den jeweiligen Wägmaschinen (3) derart beschaffen ist, daß der Pseudo-Behälter auf dem Lagertisch (12) auf halbem Weg längs der Reihe von Wägmaschinen angeordnet ist.

**Revendications**

1. Appareil de pesage combinatoire, du type qui comprend un ensemble de machines de pesage (3) et fonctionne en calculant des combinaisons de valeurs de poids de différents objets, respectivement supportés par lesdites machines de pesage, en identifiant une combinaison "optimale" de valeurs de poids qui donne un poids total égal à une poids visé préalablement choisi ou tout proche de ce dernier, et en déchargeant les objets des machines de pesage qui correspondent à la combinaison optimale, ces objets étant initialement acheminés jusqu'à un support allongé (12) qui s'étend parallèlement à l'ensemble de machines de pesage, et étant poussés latéralement depuis celui-ci vers des plates-formes de pesage correspondantes (2) des machines de pesage par l'actionnement sélectif de dispositifs individuels de déchargement (17), montés à des emplacements respectifs le long dudit support (12), quand l'appareil est en service, l'appareil étant tel que lorsqu' une combinaison "optimale" a été identifiée, une manoeuvre de rechargement a lieu, durant laquelle des objets (4) de remplacement sont apportés jusque sur les plates-formes de pesage des seules machines de pesage qui correspondent à la combinaison optimale identifiée, en déplaçant de ce fait les objets pesés correspondant à cette combinaison optimale jusque sur un moyen d'acheminement (18) agencé pour transporter les objets déplacés jusqu'à un lieu de déchargement, caractérisé en ce que ledit support allongé (12) est constitué par une table de stockage s'étendant le long de l'ensemble de machines de pesage (3), et en ce que les objets (4) apportés sont constitués par des récipients respectifs, disposés en ligne en butée les uns contre les autres sur la table de stockage, pour contenir des lots respectifs d'objets à peser, et en ce que des moyens de guidage (6) sont disposés pour venir en engagement avec ceux des récipients qui leur sont contigus, lorsqu'ils sont approchés des machines de pesage par les dispositifs de déchargement (17), de façon que ces récipients soient de ce fait séparés et acheminés jusque sur les plates-formes de pesage (2) correspondantes des machines mutuellement espacées, l'appareil étant par ailleurs tel que, lors de chaque dite manoeuvre de rechargement, au moins un des récipients en ligne sert de récipient fictif qui ne peut être déplacé vers aucune des machines de pesage, et ledit moyen d'acheminement (18) étant construit et agencé pour décharger les objets des récipients reçus, déplacés par chaque dite manoeuvre de re-chargement, et pour ramener ces récipients, une fois qu'ils ont reçu de nouveaux lots respectifs d'objets, jusqu'à la ligne de récipients présents sur la table de stockage.

2. Appareil selon la revendication 1, dans lequel la correspondance entre les dispositifs de chargement (17) et les machines de pesage (3) respectives est telle que ledit récipient fictif se trouve, sur ladite table de stockage (12), à mi-distance le long de l'ensemble de machines de pesage.

Fig. 1

# Fig. 2

0 074 827

# Fig. 3

# Fig.4